# EUROPEAN PATENT APPLICATION

(11) **EP 2 133 785 A1**
(43) Date of publication of application: **16.12.2009**
(21) Application number: 08704401.2
(22) Date of filing: 04.02.2008
(51) Int. Cl.: G06F 3/12

(54) **PRINT CONTROL SYSTEM, PRINTER, AND RECORDING MEDIUM ON WHICH PROGRAM IS RECORDED**

(30) Priority: 30.03.2007 JP 2007090484
(71) Applicant: Brother Kogyo Kabushiki Kaisha, Nagoya-shi, Aichi 467-8561 (JP)
(72) Inventor: DOI, Mariko, Nagoya-shi Aichi 467-8561 (JP)
(74) Representative: Kuhnen & Wacker
(86) International application number: PCT/JP2008/051724
(87) International publication number: WO 2008/126453

(57) **Abstract**

A MFP transmits a "content request" to a server (S202) at five o'clock (S201). When the server receives the content request, it selects content based on customer information of the user of the MFP (S301), and transmits the content and a print flag to the MFP (S302). The MFP stores the content (S203). After performing printing of the content whose print flag is ON (YES at S204, 205), the MFP transmits a "printing completion notification" to the server (S206). The server sets the print flag to OFF (S303), and performs control such that automatic printing is not performed even if download is requested again. When the viewing terminal is connected (S207), the MFP transmits the content to the viewing terminal (S208). The viewing terminal stores the received content (S102).

## Description

### Technical Field

The present disclosure relates to a printing control system, a printing apparatus, and a recording medium recording a program, and relates more specifically to a printing control system, a printing apparatus, and a recording medium recording a program that enable sharing of content provided from a server by printing the content.

### Background Art

Recently, mobile terminals that are equipped with a display screen on which characters, images, videos and the like are viewed, and/or a speaker that outputs audio are widely used. Mobile terminals equipped with a display screen can be used to view text content, image content, video content and the like. In some cases, content in which text, images and videos are mixed is viewed. Further, mobile terminals equipped with a speaker can be used to listen to music content and recorded content. Further, with mobile terminals equipped with a display screen and a speaker, video content with music may be viewed and listened to.

Along with the widespread use of these mobile terminals, a service is provided that connects mobile terminals to a network and delivers various types of content to users' mobile terminals from a content providing server. For example, in a newspaper article information delivery/subscription system described in Patent Document 1, information of a newspaper article (content) is delivered from a newspaper company terminal of a newspaper company to a service provider terminal of a service provider that provides a service. Then, the newspaper article is delivered from the service provider terminal to an information delivery device provided on a street corner. When a user connects a mobile terminal owned by the user to the information delivery device and puts money in the information delivery device, the newspaper article is delivered to the user's mobile terminal. Further, not only the service that utilizes the information delivery device, but also a service that acquires content from a content providing server via the Internet is generally provided. In this type of content providing service, content is provided to one mobile terminal, and it is not assumed that the provided content is shared by a plurality of persons.
Patent Document 1: Japanese Laid-Open Patent Publication No. 2001-265936

However, for example, when content such as a weather forecast or a TV program schedule is provided, differently from when music content or content of a novel is provided, all family members may want to use the content. Therefore, depending on the contents of the content, there are cases when a plurality of persons may want to use the content. However, if the content is delivered only to a mobile terminal as in the related art, the content is available only to a person who carries the mobile terminal, and it is inconvenient for a plurality of persons to use the content.

### Disclosure of the Invention

The present disclosure has been made to solve the above-described problems, and it is an object thereof to provide a printing control system, a printing apparatus, and a recording medium recording a program that allow sharing of content provided from a server among a plurality of persons who do not have a mobile terminal.

According to the present disclosure, there is provided a printing control system, in which a printing apparatus provided with printing means for performing printing and a server that provides content are connected via a network, and which includes a viewing terminal that connects to the printing apparatus and acquires the content from the server via the printing apparatus, and displays the content on a display screen. The printing apparatus includes first printing apparatus connection means for connecting to the viewing terminal, second printing apparatus connection means for connecting to the server via the network, and content request transmission means for causing the second printing apparatus connection means to transmit to the server a content request that requests transmission of the content. The server includes server connection means for connecting to the printing apparatus, content storage means for storing the content, print command information storage means for storing, in association with the content, print command information that indicates whether printing is to be performed by the printing apparatus, and first content transmission means for causing the server connection means to transmit, to the printing apparatus, the content stored in the content storage means and the print command information associated with the content, when the server connection means receives the content request transmitted from the content request transmission means. The printing apparatus further includes printing control means for causing the printing means to print the content, if the print command information indicates that printing is to be performed when the second printing apparatus connection means receives the content and the print command information transmitted from the first content transmission means, and second content transmission means for causing the first printing apparatus connection means to transmit, to the viewing terminal, the content that is transmitted from the first content transmission means and received by the second printing apparatus connection means. The viewing terminal includes viewing terminal connection means for connecting to the printing apparatus, second content receiving means for causing the viewing terminal connection means to receive the content transmitted from the second content transmission means, and content storage means for storing the content received by the second content receiving means.

Further, according to the present disclosure, there is provided a printing apparatus including printing means for performing printing, which connects to a viewing terminal provided with a display screen that displays an image and which further connects to a server that provides the content via a network. The printing apparatus includes: first printing apparatus connection means for connecting to the viewing terminal; second printing apparatus connection means for connecting to the server via the network; content request transmission means for causing the second printing apparatus connection means to transmit to the server a content request that requests transmission of the content; printing control means for causing the printing means to print the content, when the second printing apparatus connection means receives the content transmitted from the server and print command information that indicates whether to print the content, and when the print command information indicates that printing is to be performed; and second content transmission means for causing the first printing apparatus connection means to transmit, to the viewing terminal, the content that is transmitted from the server and received by the second printing apparatus connection means.

Moreover, according to the present disclosure, there is provided a recording medium recording a program that causes a computer to function as various processing means of the printing apparatus.

### Brief Description of the Drawings

FIG. 1 is a system configuration diagram that shows relationships among various devices that configure a printing control system of the present disclosure.
FIG. 2 is a flowchart that shows operations of respective devices.
FIG. 3 is a schematic diagram that shows an electrical configuration of a MFP 2.
FIG. 4 is a schematic diagram that shows a configuration of a RAM 22 of the MFP 2.
FIG. 5 is a schematic diagram that shows an electrical configuration of a server 3.
FIG. 6 is a schematic diagram that shows a configuration of a hard disk device 33.
FIG. 7 is a schematic diagram that shows a configuration of a customer information storage area 332.
FIG. 8 is a schematic diagram that shows a configuration of a customer content management information storage area 333.
FIG. 9 is a schematic diagram that shows a configuration of a RAM 32.
FIG. 10 is a schematic diagram that shows an electrical configuration of a viewing terminal 1.
FIG. 11 is a flowchart of MFP processing that shows an operation of the MFP 2.
FIG. 12 is a flowchart of server request processing.
FIG. 13 is a flowchart of server approval processing.
FIG. 14 is a flowchart of viewing terminal processing.
FIG. 15 is a flowchart of a modified example of MFP processing.
FIG. 16 is a flowchart of acquisition print processing that is performed in the modified example of MFP processing.

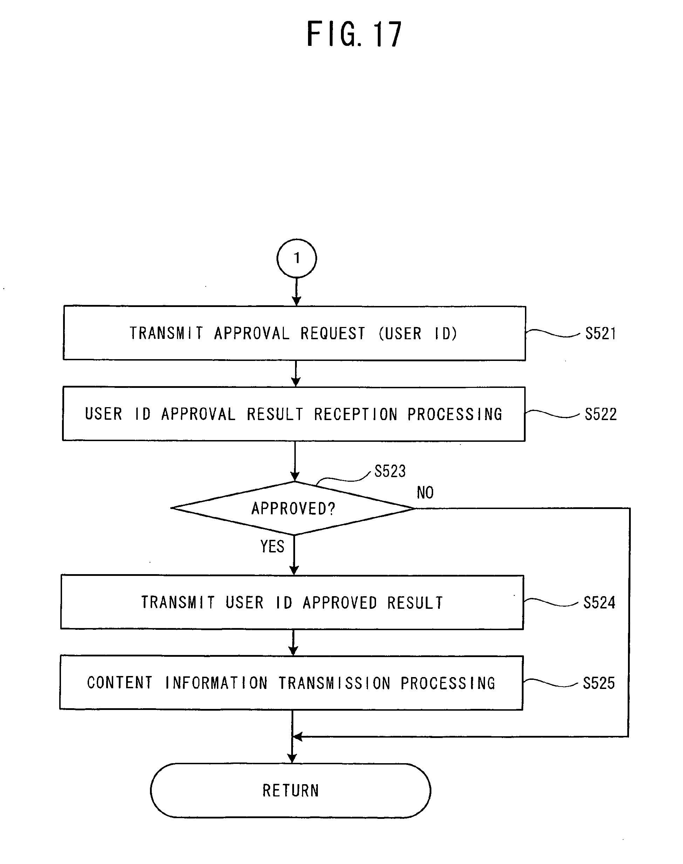

FIG. 17 is a continuation of the flowchart of the acquisition print processing shown in FIG. 16.

### Best Mode for Carrying Out the Invention

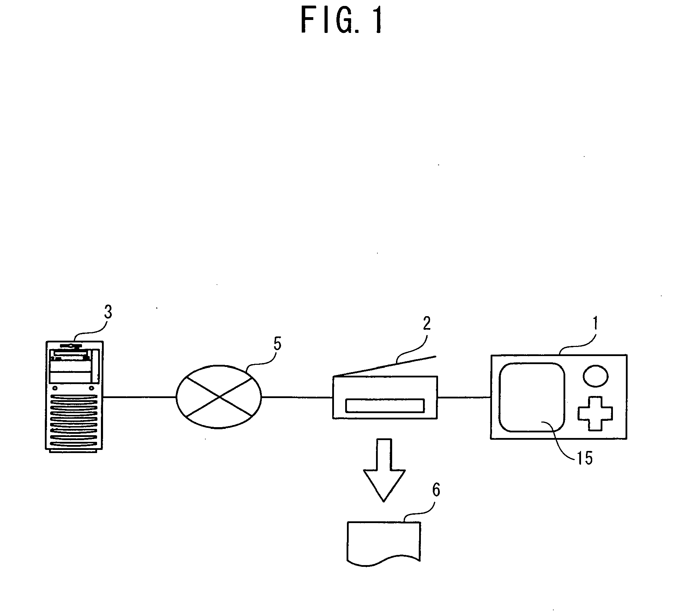

Hereinafter, an embodiment of the present disclosure will be described with reference to the drawings. First, an overview of a printing control system of the present disclosure will be described with reference to FIG. 1. As shown in FIG. 1, a MFP 2 can be connected to an Internet 5, and a server 3 can also be connected to the Internet 5. In addition, the MFP 2 and the server 3 are connected through the Internet 5. A viewing terminal 1 is a mobile type of terminal that is provided with a display portion 15, and content that is made up of characters and images is displayed on the display portion 15. The MFP 2 is provided with a function as a printing apparatus that performs printing and a function as a communication device that connects to the internet 5. The viewing terminal 1 can be connected to the MFP 2. The server 3 performs control of automatic printing of the content.

In the printing control system of the present disclosure, when content is downloaded from the server 3 to the MFP 2, a "print flag" that indicates that the printing is automatically performed by the MFP 2 is used. The print flag is transmitted from the server 3 to the MFP 2 together with the content. When the MFP 2 receives the content whose print flag is ON, the printing of the content is automatically performed. The printing of the content whose print flag is OFF is not performed. In this manner, the printing of the content is automatically performed, and a printed material 6 is output. Therefore, a plurality of persons can share the information of the content.

In the present embodiment, a category is assigned to each content. The category is obtained by classifying the contents of each content, and examples of the category include "politics", "sports", "economics", "local area", "culture", "weather", "TV program" "advertisement" and the like. In addition, the category that is allowed to be printed is set for each user. When the content of the category that is allowed to be printed is downloaded to the MFP 2, the print flag set to "ON" is transmitted together with the content.

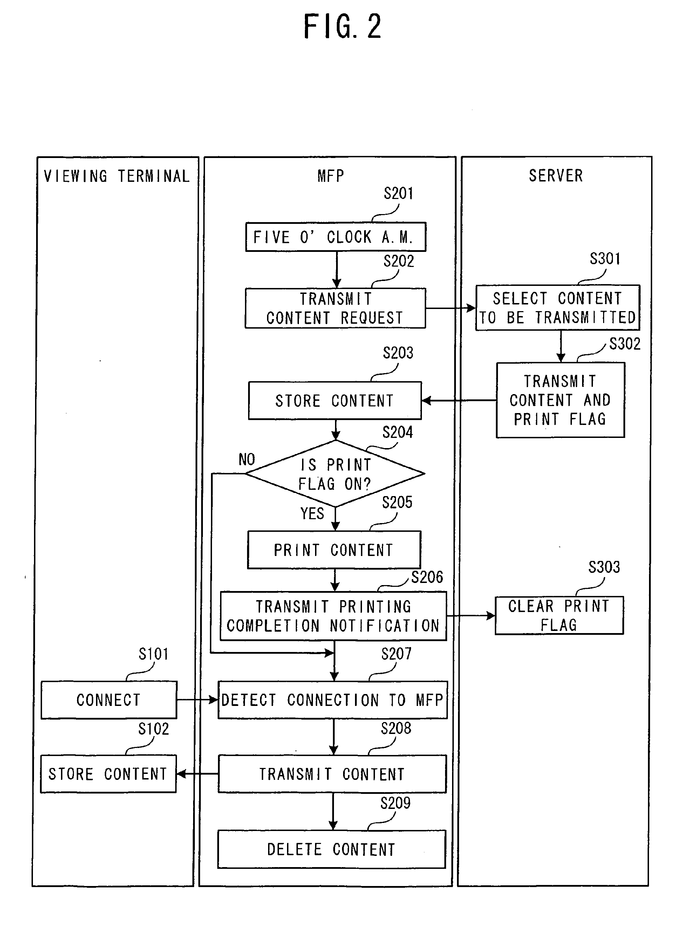

Here, an overview of operations of respective devices in the present embodiment will be described with reference to FIG. 2. First, at a predetermined time every day (for example, at a time after content such as news of the day, weather forecast, or TV program is updated, such as at 5 o'clock a.m.) (S201), the MFP 2 connects to the server 3 and transmits a "content request" that indicates a request to download content (S202). When the server 3 receives the "content request", it selects content to be transmitted to the MFP 2, based on customer information of the user corresponding to the MFP 2 that has transmitted the "content request" (S301). Then, it transmits the selected content and a print flag for the content to the MFP 2 (S302).

Then, the MFP 2 receives the content and stores it (S203). When the printing of the content whose print flag is ON is performed (Yes at S204, 205), the MFP 2 transmits to the server 3 a "printing completion notification" that indicates that the printing is completed (S206). In response to this, the server 3 sets the print flag to "OFF" (S303), and performs control such that automatic printing is not performed even if the download is requested again. Further, after the completion of the printing, if the MFP 2 detects that the viewing terminal 1 is connected (S207), it transmits the content received from the server 3 to the viewing terminal 1 (S208). Then, it deletes the content that has already been transmitted (S209). When the viewing terminal 1 is connected to the MFP 2 (S101) and receives the content, it stores the received content (S102).

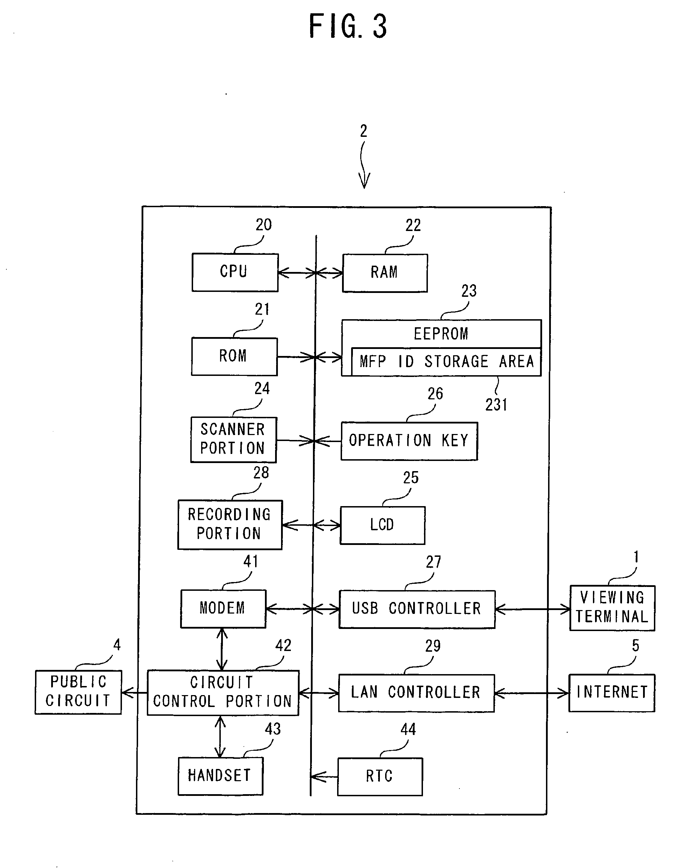

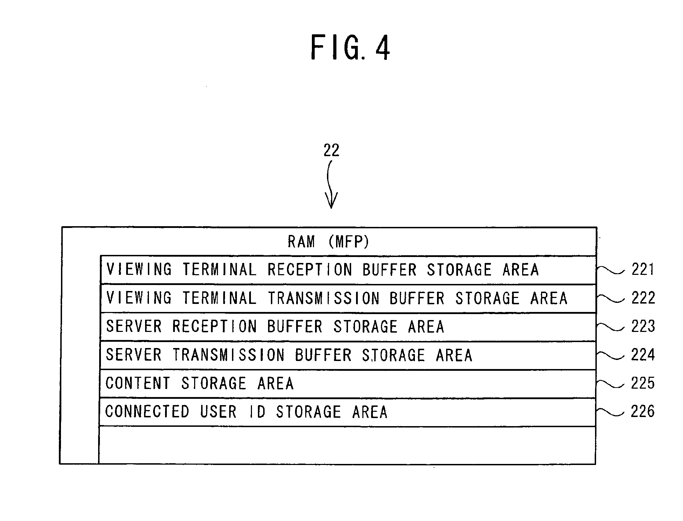

Next, the MFP 2 will be described with reference to FIG. 3 and FIG. 4. The MFP 2 is a device that is provided with functions of a printing apparatus, a communication device, a telephone, a facsimile, a scanner and a copy machine. In the present disclosure, in addition to the function as a printing apparatus that performs printing and the function as a communication device, a function to connect the viewing terminal 1 is the minimum required function. The MFP 2 is provided with a CPU 20 that performs control of the MFP 2. A ROM 21, a RAM 22, an EEPROM 23, a liquid crystal display (LCD) 25, an operation key 26, a USB controller 27, and a real time clock (RTC) 44 are connected to the CPU 20 through a bus. The ROM 21 stores a program for operating the MFP 2, and the like. The RAM 22 temporarily stores various types of data. The EEPROM 23 stores a MFP ID for identifying the MFP 2, and the like. The LCD 25 is a display screen. The operation key 26 accepts inputs from the user. The USB controller 27 is configured to connect to other devices. The RTC 44 measures time and outputs the current time. Note that the viewing terminal 1 is connected to the MFP 2 via the USB controller 27. A MFP ID storage area 231 that stores a MFP ID (MID) is provided in the EEPROM 23.

Further, in order to function as a communication device, a LAN controller 29 for connecting to the Internet 5 is provided, and is connected to the CPU 20. Further, in order to function as a printing apparatus, a recording portion 28 that performs printing is provided, and is connected to the CPU 20. In the present embodiment, the MFP 2 is a device that performs ink jet printing. Accordingly, a head drive portion for driving a piezoelectric actuator that is provided in each channel of an ink jet head, a roller drive portion for driving a feed roller for feeding printing paper, and the like are provided in the recording portion 28.

A scanner portion 24 and a modem 41 are also provided in the MFP 2, and are connected to the CPU 20. Note that a circuit control portion 42 for connecting to a public circuit 4 is connected to the modem 41, and a handset 43 that inputs and outputs voice is connected to the circuit control portion 42.

Next, various storage areas that are provided in the RAM 22 will be described with reference to FIG. 4. A viewing terminal reception buffer storage area 221, a viewing terminal transmission buffer storage area 222, a server reception buffer storage area 223, a server transmission buffer storage area 224, a content information storage area 225, and a connected user ID storage area 226 and the like are provided in the RAM 22 of the MFP 2. Note that various types of storage areas that are not shown in the drawings are provided in the RAM 22. When data is transmitted from the viewing terminal 1, the received data is stored in the viewing terminal reception buffer storage area 221. The data to be transmitted to the viewing terminal 1 is stored in the viewing terminal transmission buffer storage area 222. The data received when the data is transmitted from the server 3 is stored in the server reception buffer storage area 223. The data to be transmitted to the server 3 is stored in the server transmission buffer storage area 224. The content information received from the server 3 (the text and images of the content, the content ID, the content title, the print flag) is stored in the content information storage area 225. The user ID that identifies the connected viewing terminal 1 is stored in the connected user ID storage area 226.

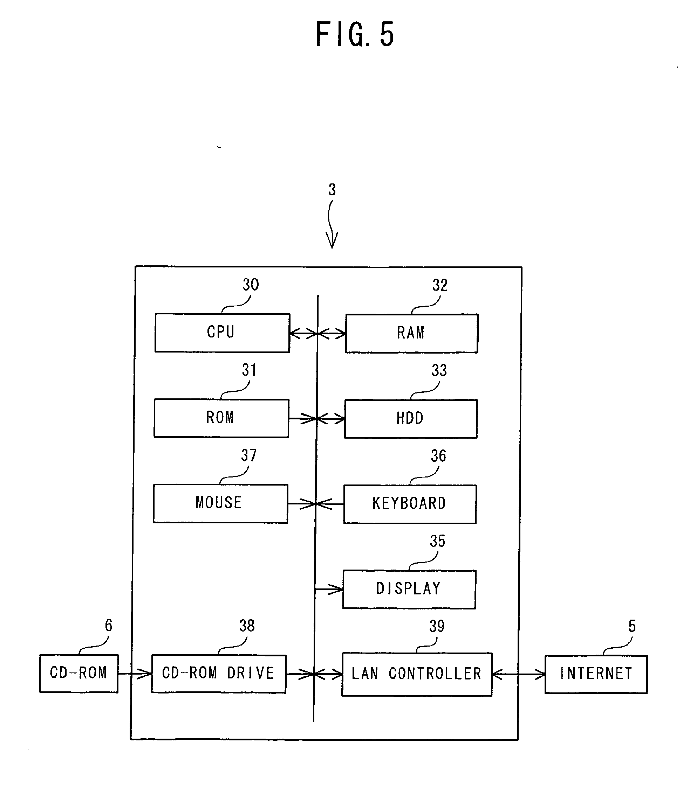

Next, the server 3 will be described with reference to FIG. 5 to FIG. 9.

As shown in FIG. 5, the server 3 is provided with a CPU 30 that performs control of the server 3. A ROM 31, a RAM 32, a hard disk device (HDD) 33, a keyboard 36, a mouse 37, a display 35, a CD-ROM drive 38, and a LAN controller 39 are connected to the CPU 30 through a bus. The ROM 31 stores BIOS and the like. The RAM 32 temporarily stores various types of data. The HDD 33 stores an OS, a program, and various types of information. The keyboard 36 and the mouse 37 accept inputs from the user. The display 35 outputs an image. The CD-ROM drive 38 reads a CD-ROM 6. The LAN controller 39 is configured to connect to the Internet 5.

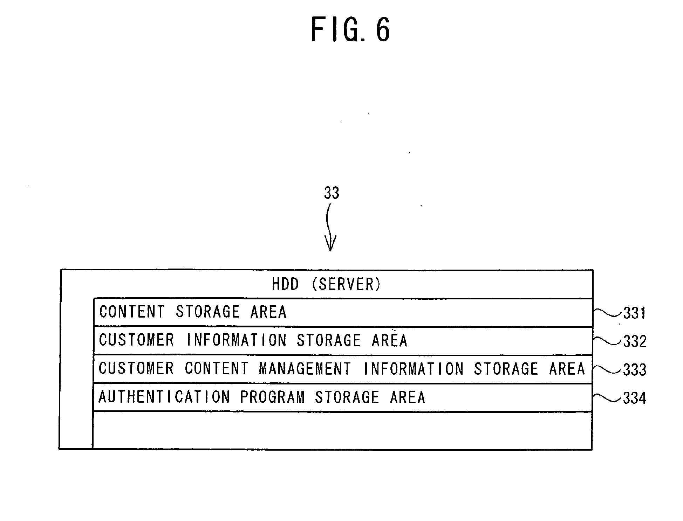

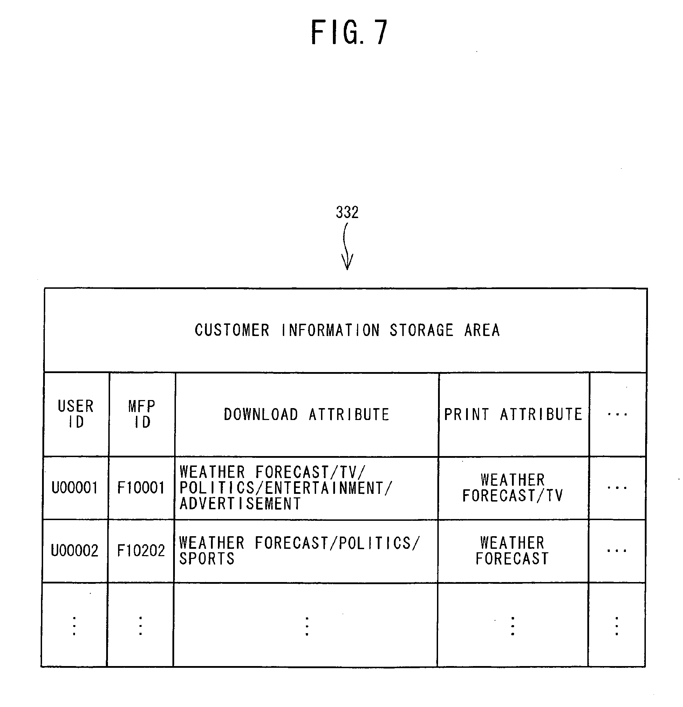

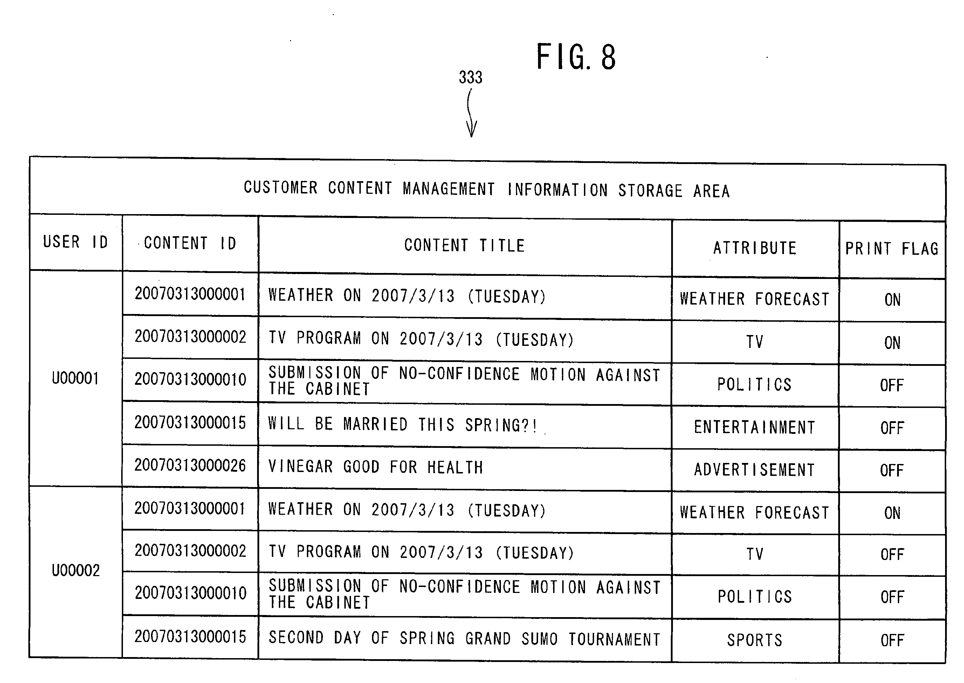

As shown in FIG. 6, a content storage area 331, a customer information storage area 332, a customer content management information storage area 333, an authentication program storage area 334 and the like are provided in the HDD 33. Note that various types of storage areas that are not shown in the drawings are also provided in the HDD 33. Content is stored in the content storage area 331. More specifically, the content ID that identifies the content, the name of the content, the text and images of the content, the attribute of the content and the like are stored. Information relating to a customer who is allowed, by contract, to download content from the server 3 is stored in the customer information storage area 332 (refer to FIG. 7). Information to manage the content that has been transmitted to the customer is stored in the customer content management information storage area 333 (refer to FIG. 8). An authentication program for operating the server 3 is stored in the authentication program storage area 334.

Next, the customer information storage area 332 that is provided in the HDD 33 will be described with reference to FIG. 7. As shown in FIG. 7, a user ID field, a MFP ID field, a download attribute field, a print attribute field and the like are provided in the customer information storage area 332. The user ID that identifies the user is stored in the user ID field. The MFP ID that identifies the MFP 2 used by the user is stored in the MFP ID. The value that indicates an attribute of the content that the user is allowed by contract to download is stored in the download attribute field. The value that indicates an attribute of the content that is automatically printed by contract when the user downloads the content is stored in the print attribute field. Note that, although words such as "weather forecast", "TV" and the like are described in the example shown in FIG. 7, instead of storing words, codes that indicate respective attributes may be stored.

In the example shown in FIG. 7, the MFP ID of the MFP 2 used by a customer who has the user ID "U00001" is "F10001", and the download attribute is "weather forecast", "TV", "politics", "entertainment" and "advertisement", among which, "weather forecast" and "TV" are set as the print attribute. The MFP ID of the MFP 2 used by a customer who has the user ID "U00002" is "F10202", and the download attribute is "weather forecast", "politics", and "sports", among which, "weather forecast" is set as the print attribute. Customer information about other customers is omitted.

Next, the customer content management information storage area 333 that is provided in the HDD 33 will be described with reference to FIG. 8. As shown in FIG. 8, a user ID field, a content ID field, a content title field, an attribute field, and a print flag field are provided in the customer content management information storage area 333. In the customer content management information, information relating to the content that has been downloaded for each customer (user ID) is stored and managed. The user ID is stored in the user ID field. Then, the content ID, the content title, and the attribute of the downloaded content are respectively stored in the content ID field, in the content title field, and in the attribute field. A print flag that indicates whether or not automatic printing is performed when the content is downloaded is stored in the print flag field. When "1" is stored, the print flag indicates "ON", and when "0" is stored, the print flag indicates "OFF". The print flag of the content with the attribute that is stored in the print attribute field of the customer information storage area 332 is set to "ON", and the print flag of the content with any attribute that is not stored in the print attribute field is set to "OFF".

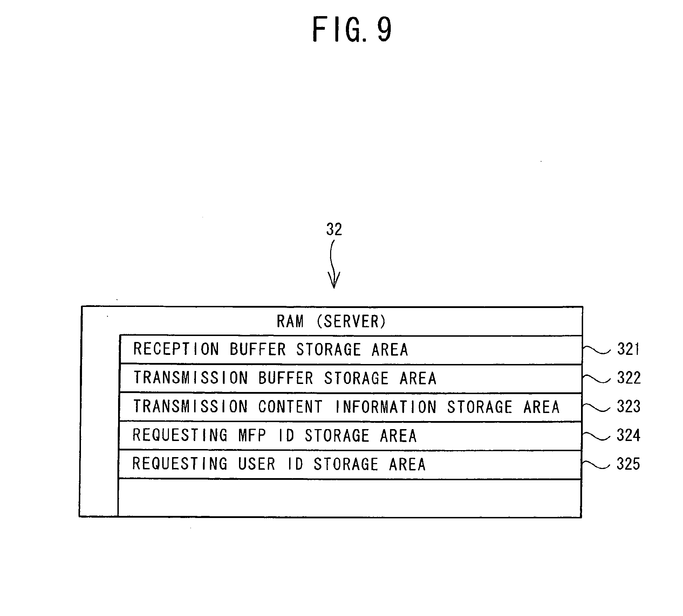

In the example shown in FIG. 8, "weather forecast", "TV", "politics", "entertainment" and "advertisement" are registered as the download attribute for the customer who has the user ID "U00001 ". However, the print attribute is "weather forecast" and "TV". Therefore, as shown in FIG. 9, the print flags of the content whose attributes are "weather forecast" and "TV" are set to "ON, and the print flags of the content whose attributes are "politics", "entertainment" and "advertisement" are set to "OFF".

When the "content request" that requests download of the content is received from the MFP 2 and the content is transmitted, the customer content management information is updated. The content ID, the content title, the attribute and the print flag of the transmitted content are stored. These pieces of information relating to the content are stored in the content storage area 331 of the HDD 33, together with the text of the content. Note that, after the printing of the content has been performed by the MFP 2, the printing completion notification is transmitted from the MFP 2, and the print flag is set to OFF. Thus, even if download of the content is requested again, the printing is not performed.

Next, storage areas that are provided in the RAM 32 of the server 3 will be explained with reference to FIG. 9. As shown in FIG. 9, a reception buffer storage area 321, a transmission buffer storage area 322, a transmission content information storage area 323, a requesting MFP ID storage area 324, and a requesting user ID storage area 325 and the like are provided in the RAM 32. Note that various types of storage areas that are not shown in the drawings are also provided in the RAM 32. Data that is transmitted from the MFP 2 is stored in the reception buffer storage area 321. The data to be transmitted to the MFP 2 is stored in the transmission buffer storage area 322. The ID of the content that is transmitted to the MFP 2 is stored in the transmission content information storage area 323. The MFP ID of the MFP 2 that has requested transmission of the content is stored in the requesting MFP ID storage area 324. The user ID of the viewing terminal 1 that has requested approval of content acquisition is stored in the requesting user ID storage area 325.

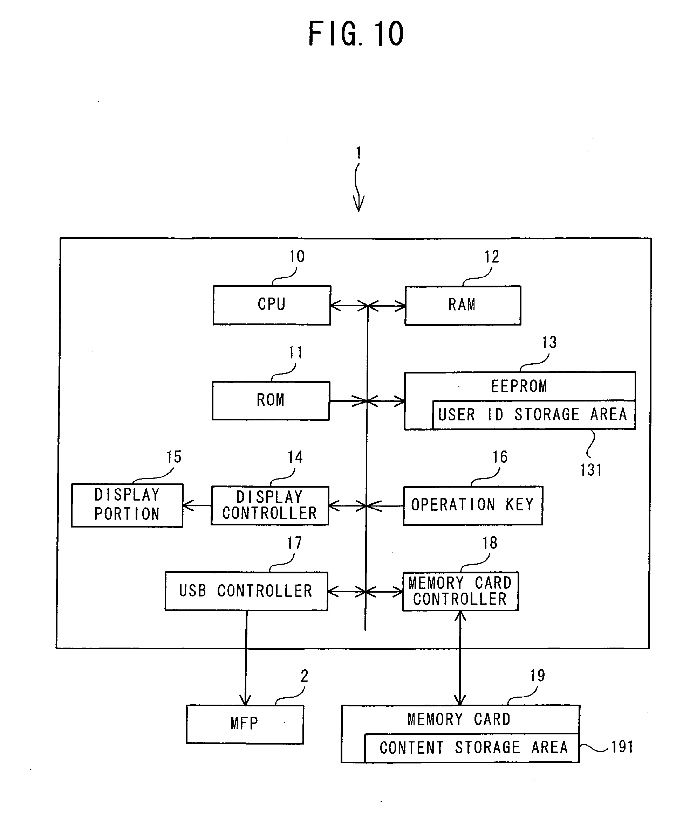

Next, the viewing terminal 1 will be described with reference to FIG 10. The viewing terminal 1 displays on the display portion 15 content that is stored in a memory card 19. As shown in FIG. 10, the viewing terminal 1 is provided with a CPU 10 that performs control of the viewing terminal 1.
A ROM 11, a RAM 12, an EEPROM 13, a display controller 14, an operation key 16, a USB controller 17, and a memory card controller 18 are connected to the CPU 10 through a bus. The ROM 11 stores a viewing program for operating the viewing terminal 1, and the like. The RAM 12 temporarily stores various types of data. The EEPROM 13 stores a user ID that is a code for identifying the user who is using the viewing terminal 1, and the like. The display controller 14 performs control of the display portion 15. The operation key 16 accepts inputs from the user. The USB controller 17 is configured to connect to other devices. The memory card controller 18 is configured to connect the memory card 19. The EEPROM 13 is provided with a user ID storage area 131. The memory card 19 is provided with a content storage area 191 that stores content.

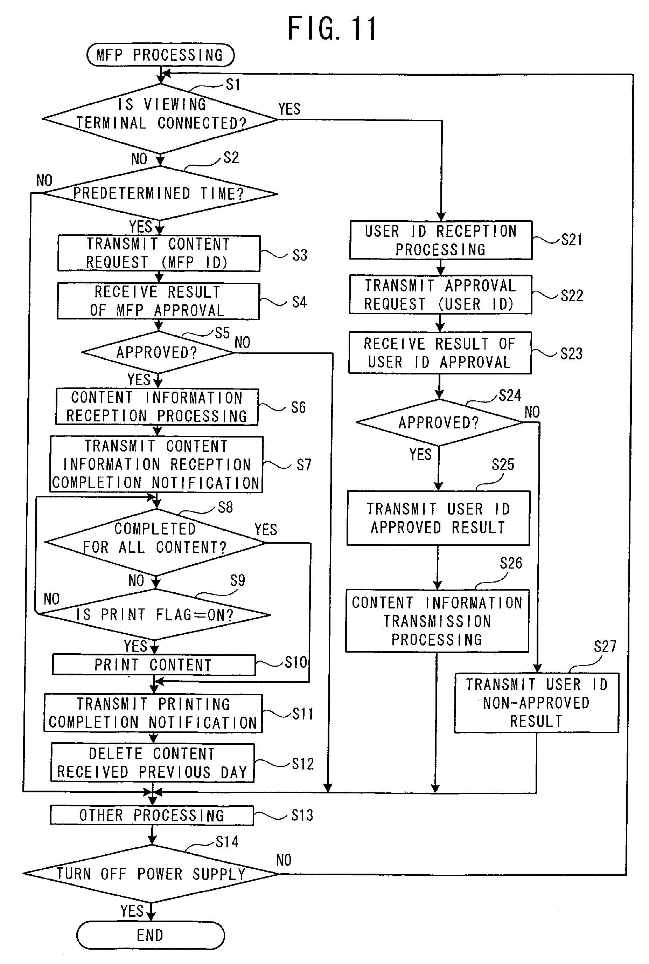

Next, an operation of the MFP 2 will be described with reference to FIG. 11. When a power supply of the MFP 2 is turned on, after initial processing, such as operation confirmation, initialization of the storage areas and the like, has been performed, MFP processing is started by executing a program stored in the ROM 11. Normally, the power supply of the MFP 2 is constantly made ON so that facsimile reception and telephone call reception can be performed anytime. Here, only the processing relating to the present disclosure will be described, and a description of other processing of the MFP 2 will be omitted.

First, it is determined whether or not the viewing terminal 1 is connected (S1). When the viewing terminal 1 is not connected (NO at S1), it is determined whether or not it is a predetermined time (five o'clock a.m. in the present embodiment) (S2). When it is not the predetermined time (NO at S2), there is no need to perform processing (S3 to S12) relating to download of the content from the server 3. Accordingly, the processing proceeds to S13, and other processing is performed (S13). In the other processing, a printing operation in response to a print command of the content from the viewing terminal 1, a content transmission request to the server 3/reception operation in response to a request of re-reception of the content from the viewing terminal 1, and the like are performed. In addition to the above, also performed is processing of a printing operation performed by the recording portion 28, a scanning operation in the scanner portion 24, telephone call and facsimile transmission/reception operations in the circuit control portion 42, operations in response to acceptance of inputs from the operation key 26, and the like. Then, it is determined whether or not a command to turn off the power supply has been issued (S 14). When the command to turn off the power supply has not been issued (NO at S 14), the processing returns to S1. Note that, when the command to turn off the power supply has been issued (YES at S14), this processing is terminated, and the power supply of the MFP 2 is turned off.

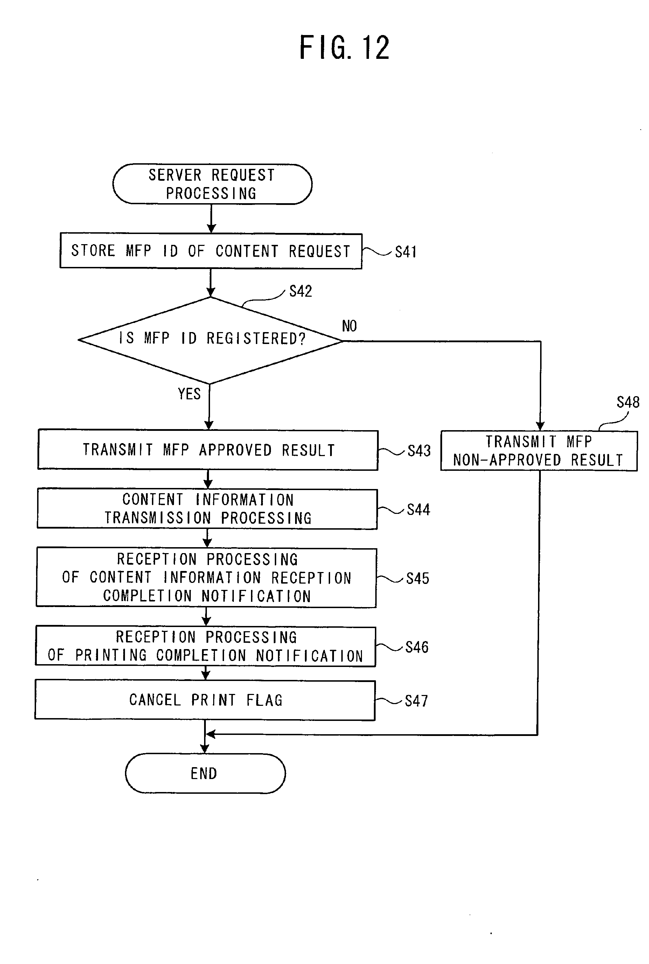

Then, the processing at S1, S2, S 13 and S 14 is repeatedly performed, and when the predetermined time arrives (YES at S2), the processing (S3 to S12) relating to download of the content from the server 3 is performed. First, the "content request" that requests download of the content is stored in the server transmission buffer storage area 224, and transmitted to the server 3 (S3). In the "content request", a code indicating that this is the "content request" and the MFP ID that is stored in the MFP ID storage area 231 of the EEPROM 23 are described. Then, a result of MFP approval from the server 3 is received (S4). In this reception processing, the result of the approval of the MFP ID, which is decided by the server 3 in response to the "content request", is received. The received approval result that has been transmitted from the server 3 is stored in the server reception buffer storage area 223 of the RAM 22. When the server 3 gives approval, it transmits a "MFP approved result" to the MFP 2 (refer to S43 in FIG. 12). When the server 3 does not give approval, it transmits a "MFP non-approved result" (refer to S48). Thus, based on whether the received approval result is the "MFP approved result" or the "MFP non-approved result", a determination as to whether "approval" has been given or not is made (S5). When the "MFP non-approved result" is received and the "approval" has not been given (NO at S5), the processing proceeds to S 13.

Further, if the server 3 transmits the "MFP approved result", then it transmits "content information" (refer to S44 in FIG. 12). As a result, when the "MFP approved result" is received and therefore the "approval" has been given (YES at S5), reception processing of the "content information" is performed (S6). In this reception processing, the received "content information" that has been transmitted from the server 3 is stored in the server reception buffer storage area 223 of the RAM 22. Then, the content stored in the server reception buffer storage area 223 is stored in the content information storage area 225 of the RAM 22. In the "content information", in addition to the text and images of the content, the content ID that identifies the content, the content title that is the name of the content, and the print flag that indicates whether or not the content is to be printed are also described. In the content information storage area 225, the day and time (current day and time) at which the content is received is stored in association with the content information. When the reception processing of the "content information" is completed (S6), a "content information reception completion notification" is stored in the server transmission buffer storage area 224, and is transmitted to the server 3 (S7).

Then, print processing of the content is performed (S8 to S10). Here, for the contents stored in the content information storage area 225, the printing of the contents whose print flags are ON is performed. First, it is determined whether or not the processing has been completed for all the contents stored in the content information storage area 225 (S8). When the processing has not been completed for all the contents (NO at S8), the print flags of the unprocessed contents are checked, and it is determined whether or not there is the content whose print flag is "ON" (S9). When there is the content whose print flag is "ON" (YES at S9), print data for the content is created by the recording portion 28, and the printing is performed (S10). Then, the processing returns to S8. Note that, when the print flag is not set to "ON" (NO at S9), the printing is not performed, and the processing returns to S8. Then, the processing at S8 to S10 is repeatedly performed. When the processing is completed for all the contents (YES at S8), the processing proceeds to S11, and the "printing completion notification" is stored in the server transmission buffer storage area 224 and is transmitted to the server 3 (S11). Then, among the contents stored in the content information storage area 225, the contents received before the previous day are deleted (S12). Then, the processing proceeds to S13, and the other processing is performed (S 13). When the command to turn off the power supply has not been issued (NO at S14), the processing returns to S1.

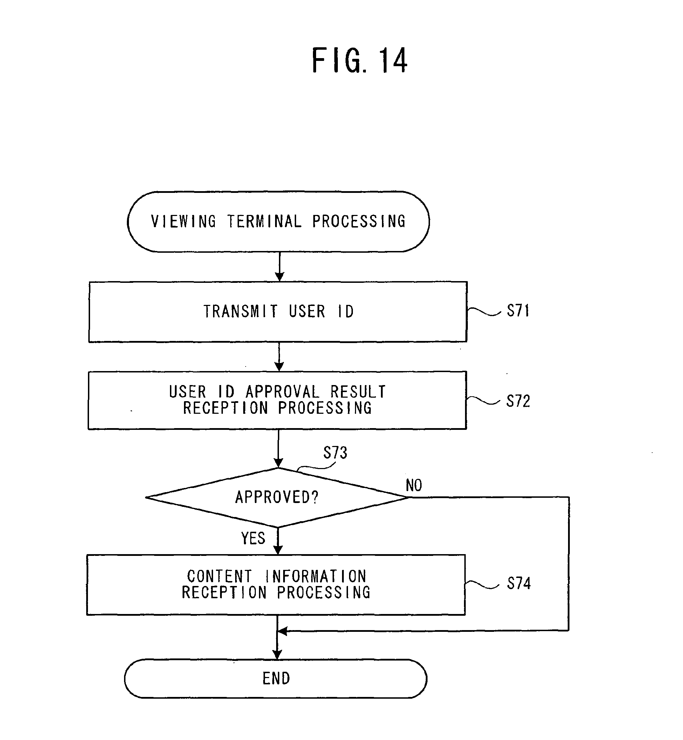

Then, the processing at S1, S2, S 13 and S 14 is repeatedly performed, and when the connection of the viewing terminal 1 is detected (YES at S1), processing for transmitting the content stored in the content information storage area 225 to the viewing terminal 1 is performed (S21 to S26). First, reception processing of the user ID from the viewing terminal 1 is performed (S21). When the viewing terminal 1 is connected to the MFP 2, it transmits the user ID stored in its EEPROM 13 to the MFP 2 (refer to S81 in FIG. 14). When the user ID transmitted from the viewing terminal 1 is received, it is stored in the viewing terminal reception buffer storage area 221. Then, the user ID is stored in the connected user ID storage area 226.

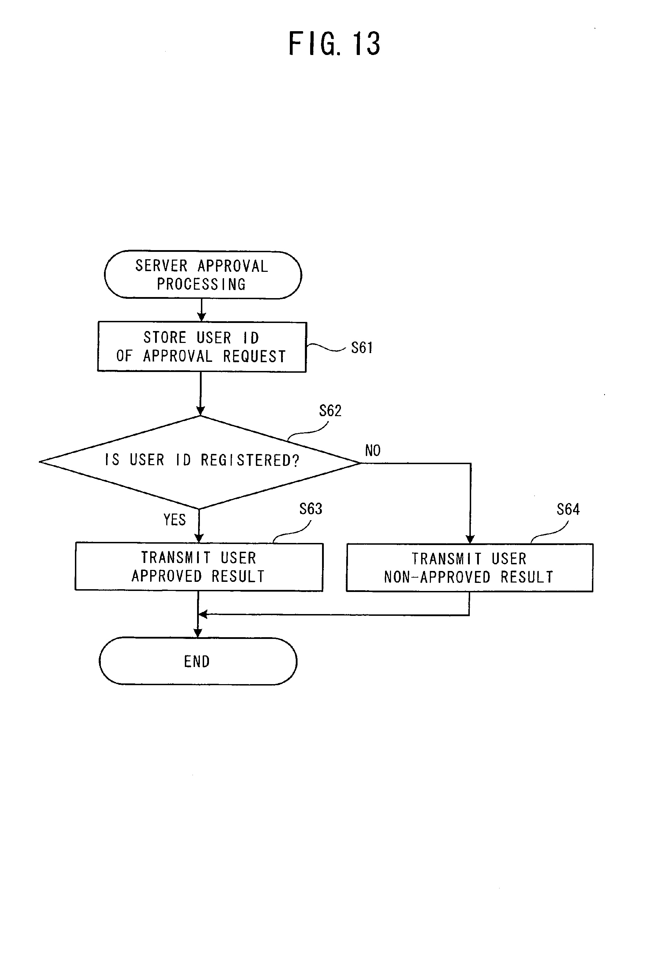

When the user ID is received from the viewing terminal 1 (S21), an "approval request" that describes the user ID is stored in the server transmission buffer storage area 224, and is transmitted to the server 3 (S22). The server 3 decides whether to approve transmission of the content with respect to the user ID. When the approval is given, a "user approved result" is transmitted to the MFP 2 (refer to S62 and S63 in FIG. 13), and when the approval is not given, a "user non-approved result" is transmitted (refer to S64). Thus, the MFP 2 subsequently receives a result of the user approval from the server 3 (S23). In this reception processing, when the "result of the user approval" transmitted from the server 3 is received, it is stored in the server reception buffer storage area 223. Then, based on whether the received approval result is the "user approved result" or the "user non-approved result", a determination as to whether "approval" has been given or not is made (S24). When the "user non-approved result" is received and therefore the "approval" has not been given (NO at S24), the "user non-approved result" is transmitted to the viewing terminal 1 (S27), and the processing proceeds to S 13.

On the other hand, when the "user approved result" is received and therefore the "approval" has been given (YES at S24), the received "user approved result" is stored in the viewing terminal transmission buffer storage area 222, and is transmitted to the viewing terminal 1 (S25). Subsequently, content information transmission processing is performed (S26). Here, the content information stored in the content information storage area 225 (the text of the content, the content ID and the content title) is stored in the viewing terminal transmission buffer storage area 222, and is transmitted to the viewing terminal 1. Note that, when there is no content to be transmitted, a code indicating that fact is transmitted. Then, the processing proceeds to S13. Thereafter, the other processing is performed (S13). When the command to turn off the power supply has not been issued (NO at S 14), the processing returns to S1.

In the above-described manner, the MFP 2 connects to the server 3 at the predetermined time, and downloads content. When the print flag of the downloaded content is ON, the printing is performed. When the MFP 2 detects the connection of the viewing terminal 1, it requests approval from the server 3 for the viewing terminal 1 that has connected to the server 3, and when the approval result is OK, it transmits to the viewing terminal 1 the content received from the server 3.

Next, operations in the server 3 will be described with reference to FIG. 12 and FIG. 13. Server request processing is processing that is performed when the "content request" transmitted from the MFP 2 is received. Server approval processing is processing that is performed when the "approval request" transmitted from the MFP 2 is received. The "content request" and the "approval request" that are transmitted from the MFP 2 are stored in the reception buffer storage area 321 of the RAM 32.

First, the server request processing will be described with reference to FIG. 12. First, the MFP ID that is described in the "content request" stored in the reception buffer storage area 321 is stored in the requesting MFP ID storage area 324 of the RAM 32 (S41). Then, it is determined whether or not the MFP ID has been registered (S42). More specifically, the customer information stored in the customer information storage area 332 of the HDD 33 is checked (refer to FIG. 7), and when the MFP ID stored in the requesting MFP ID storage area 324 is present in the MFP ID field, it is determined that the MFP ID has been registered. When the MFP ID has not been registered (NO at S42), the "MFP non-approved result" is stored in the transmission buffer storage area 322, and is transmitted to the MFP 2 that has transmitted the "content request" (S48). Then, this processing is terminated.

When the MFP ID has been registered (YES at S42), the "MFP approved result" is stored in the transmission buffer storage area 322, and is transmitted to the MFP 2 that has transmitted the "content request" (S43). Subsequently, content transmission processing to the MFP 2 is performed (S44). In the content transmission processing, first, the download attribute of the information of the customer whose MFP ID has been registered is checked. Then, the content information (the content text, the content ID, the content title and the print flag) of the content which is to be delivered today, among the contents stored in the content storage area 331 of the HDD 33, and whose attribute is specified by the download attribute is stored in the transmission content information storage area 323. Note that the content which is to be delivered today is, for example, the content that has been created since five o'clock the previous morning. Then, the "content information" that describes the content information stored in the transmission content information storage area is stored in the transmission buffer storage area 322, and is transmitted to the MFP 2. Then, the content information is stored in the customer content management information storage area 333 of the HDD 33.

When the MFP 2 receives the "content information", it transmits the "content information reception completion notification" (refer to S6 and S7 in FIG. 11). Then, the server 3 performs reception processing of the "content information reception completion notification" from the MFP 2 (S45). In this reception processing, when the "content information reception completion notification" transmitted from the MFP 2 is received, it is stored in the reception buffer storage area 321.

After the MFP 2 has transmitted the "content information reception completion notification" (refer to S7 in FIG. 11), it performs the printing of the content whose print flag is ON, and transmits the "printing completion notification" (refer to S8 to S11 in FIG. 11). Thus, when the server 3 receives the "content information reception completion notification" (S45), it performs reception processing of the "printing completion notification" from the MFP 2 (S46). In this reception processing, when the "printing completion notification" transmitted from the MFP 2 is received, it is stored in the reception buffer storage area 321. When the "printing completion notification" is received (S46), the print flag of the content information that was transmitted at S44, in the customer content management information storage area 333, is set to OFF (S47). Then, this processing is terminated.

In this manner, when the server 3 receives the "content request" from the MFP 2, it decides whether to approve transmission of the content to the MFP 2. When the MFP ID has been registered in the customer information and approval is given, the server 3 transmits the content information to the MFP 2. Then, when the "printing completion notification" is received from the MFP 2, the print flag of the transmitted content is set to OFF.

Next, the server approval processing will be described with reference to FIG. 13. First, the user ID that is described in the "approval request" stored in the reception buffer storage area 321 is stored in the requesting user ID storage area 325 of the RAM 32 (S61). Then, it is determined whether or not the user ID has been registered (S62). More specifically, the customer information stored in the customer information storage area 332 of the HDD 33 is checked (refer to FIG. 7), and when the user ID stored in the requesting user ID storage area 325 is present in the user ID field, it is determined that the user ID has been registered. When the user ID has not been registered (NO at S62), the "user non-approved result" is stored in the transmission buffer storage area 322, and is transmitted to the MFP 2 that has transmitted the "approval request" (S64). Then, this processing is terminated. When the user ID has been registered (YES at S62), the "user approved result" is stored in the transmission buffer storage area 322, and is transmitted to the MFP 2 that has transmitted the "approval request" (S63). Then, this processing is terminated.

In this manner, when the server 3 receives from the MFP 2 the "approval request" that describes the user ID, it decides whether to approve transmission of the content to the user. When the approval is given, the "user approved result" is transmitted.

Next, an operation of the viewing terminal 1 will be described with reference to FIG. 14. This viewing terminal processing is started when the connection to the MFP 2 is detected.

First, the user ID stored in the user ID storage area 131 of the EEPROM 13 is stored in a transmission buffer (not shown in the drawings) of the RAM 12, and is transmitted to the MFP 2 (S71). The MFP 2 requests the server 3 to decide whether to approve transmission of the content to the user ID that was transmitted at S71 (refer to S22 in FIG. 11). Then, a result of the user approval in response to the request is received. Then, the received "user approved result" or "user non-approved result" is transmitted to the viewing terminal 1. If the "approval" has been given, then content information is transmitted (refer to S23 to S27 in FIG. 11). Thus, the result of the user approval is received from the MFP 2 (S72). Then, based on whether the received approval result is the "user approved result" or the "user non-approved result", a determination as to whether "approval" has been given or not is made (S73). When the "user non-approved result" is received and therefore the "approval" has not been given (NO at S73), this processing is immediately terminated. On the other hand, when the "user approved result" is received and therefore the "approval" has been given (YES at S73), reception processing of the content from the MFP 2 is performed (S74). In the content reception processing, the content information that has been received from the MFP 2 and stored in the reception buffer storage area (not shown in the drawings) of the RAM 12 is stored in the content storage area 191 of the memory card 19. Note that, when a code is received indicating that there is no content to be transmitted, a message indicating that fact is displayed on the display portion 15. Then, this processing is terminated.

In this manner, when the viewing terminal 1 is connected to the MFP 2, it passes the user ID to the MFP 2. When the transmission of the content is approved by the server 3, the content information can be received and stored in the content storage area 191 of the memory card 19.

In the above-described manner, the MFP 2 connects to the server 3 at the predetermined time every day, and downloads content. Then, it performs automatic printing of the content whose print flag is ON. Accordingly, a plurality of persons can share the information of the content that they want to view. For example, even if all the family members do not have the viewing terminal 1, the content that the family wants to share is automatically printed by the MFP 2 at the predetermined time every day. Therefore, they can know the information of the content without looking at the screen of the viewing terminal 1, and can share the information. In addition, even when a person who has the viewing terminal 1 is away, it is possible to know the information of the content, which is convenient.

Moreover, the MFP 2 transmits the printing completion notification to the server 3 when the printing is completed. Therefore, the server 3 can know that the content whose print flag is ON has been printed. Further, in the present embodiment, when the server 3 receives the printing completion notification, it sets the print flag of the content to OFF. Thus, when the server 3 downloads the content to the MFP 2 a subsequent time, it can perform control such that the content is not automatically printed. For example, when the content that was downloaded in the past is downloaded again, there is a case in which the printing is not necessary because the content has already been printed once. In this case, the content is not automatically printed by the MFP 2, which is convenient.

It should be noted that the printing control system of the present disclosure is not limited to the embodiment described above, and it is obvious that various types of modifications can be made within the scope of the present disclosure. In the embodiment described above, the predetermined time is set to five o'clock a.m. However, it is needless to mention that the predetermined time is not limited to this. Further, in the embodiment described above, once the content whose print flag is ON is printed, the print flag is set to OFF. However, instead of setting the print flag OFF after only one printing, the number of times may be determined in advance, and the print flag may be set to OFF after the printing has been performed the number of times. In addition, in the embodiment described above, after the content has been received from the server 3 and the printing has been completed, the content of the previous day is deleted from the content storage area 225 (refer to S12 in FIG. 11). However, it is needless to mention that a timing for deleting the past content is not limited to this example. For example, the deletion may be performed after the content has been transmitted to the viewing terminal 1 at S26. Alternatively, the deletion may be performed based on a command from the user.

Additionally, in the embodiment described above, the print data for printing the content is created in the MFP 2 that has received the content from the server 3, and the printing is performed (S 10 in FIG. 11). However, instead of creating the print data in the MFP 2 that performs the printing, the print data may be stored in advance in the server 3, or the print data may be created when the content is transmitted. Thus, also the print data may be transmitted to the MFP 2, for the content whose print flag is ON.

Further, in the embodiment described above, the MFP 2 transmits the content request to the server 3 at the predetermined time, and downloads the content. However, the MFP 2 may transmit the content request to the server 3 at a time other than the predetermined time. For example, the content request may be transmitted when it is detected that the viewing terminal 1 is connected to the MFP 2. Here, processing of the MFP 2 that is performed in a case where download of the content is requested to the server 3 when the viewing terminal 1 is connected to the MFP 2 will be described.

First, it is determined whether or not the viewing terminal 1 is connected (S501). When the viewing terminal 1 is not connected (NO at S501), a connection flag is set to OFF (S505), and the processing proceeds to S506. Note that the connection flag is stored in the RAM 22, and when the viewing terminal 1 is connected, "1" is stored and the connection flag is set to "ON". When the viewing terminal 1 is not connected, "0" is stored and the connection flag is set to "OFF". At S506, other processing is performed (S506). In the other processing, a printing operation in response to a print command of the content from the viewing terminal 1, a content transmission request to the server 3/reception operation in response to a request of re-reception of the content from the viewing terminal 1, and the like are performed. In addition to the above, also performed is processing of a printing operation performed by the recording portion 28, a scanning operation in the scanner portion 24, telephone call and facsimile transmission/reception operations in the circuit control portion 42, operations in response to acceptance of inputs from the operation key 26, and the like. Then, it is determined whether or not a command to turn off the power supply has been issued (S507). When the command to turn off the power supply has not been issued (NO at S507), the processing returns to S501. Note that, when the command to turn off the power supply has been issued (YES at S507), this processing is terminated, and the power supply of the MFP 2 is turned off.

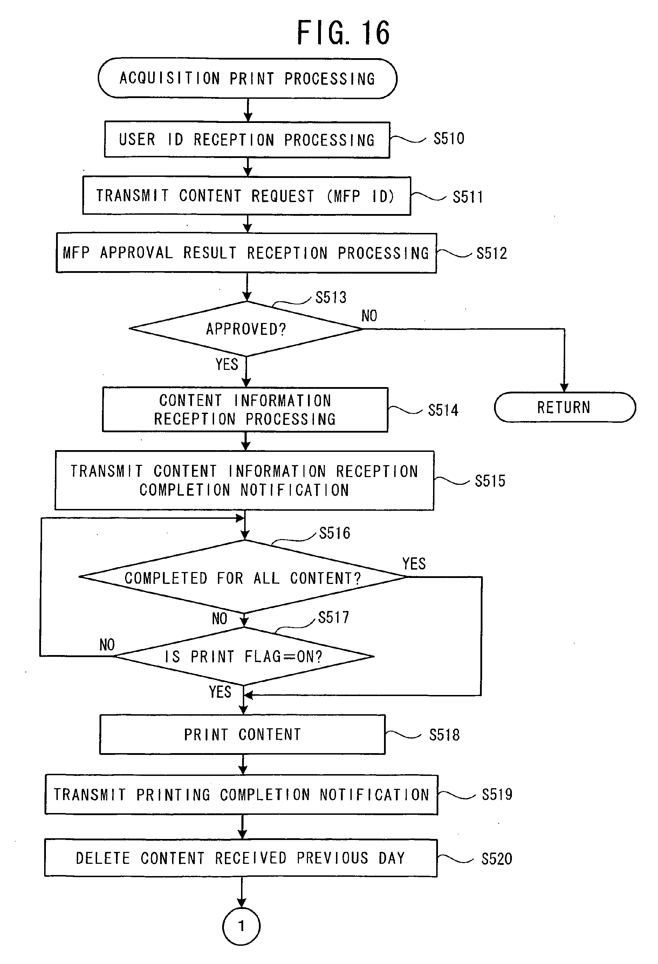

On the other hand, when the viewing terminal 1 is connected (YES at S501), it is determined, based on whether or not the connection flag is ON, whether the viewing terminal 1 was connected also at the last time or is connected for the first time (S502). When the connection flag is OFF and therefore the viewing terminal 1 is connected for the first time (NO at S502), the connection flag is set to ON (S503), and acquisition print processing is performed (S504, refer to FIG. 16). Note that when the viewing terminal 1 is connected to the MFP 2, it transmits the user ID stored in its EEPROM 13 to the MFP 2.

In the acquisition print processing, first, reception processing of the user ID from the viewing terminal 1 is performed as shown in FIG. 16 (S510). Here, the user ID transmitted from the viewing terminal 1 is stored in the connected user ID storage area 226.

Then, processing (S511 to S520) relating to download of the content from the server 3 is performed. First, the "content request" that requests download of the content is transmitted to the server 3 (S511). Then, a result of MFP approval is received from the server 3 (S512). The received result of the MFP approval that has been transmitted from the server 3 is stored in the server reception buffer storage area 223 of the RAM 22. Then, based on whether the received approval result is a "MFP approved result" or a "MFP non-approved result", a determination as to whether "approval" has been given or not is made (S513). When the "MFP non-approved result" is received and therefore the "approval" has not been given (NO at S513), the acquisition print processing is terminated, and the processing returns to the MFP processing.

Then, if the server 3 transmits the "MFP approved result", it next transmits "content information". Meanwhile, when the "MFP approved result" is received and therefore the "approval" has been given (YES at S513), reception processing of the "content information" is performed (S514). In this reception processing, the received "content information" that has been transmitted from the server 3 is stored in the content information storage area 225 of the RAM 22. In the "content information", in addition to the text and images of the content, the content ID that identifies the content, the content title that is the name of the content, and the print flag that indicates whether or not the content is to be printed are also described. When the reception processing of the "content information" is completed (S514), the "content information reception completion notification" is transmitted to the server 3 (S515).

Then, print processing of the content is performed (S516 to S518). First, it is determined whether or not the processing has been completed for all the contents stored in the content information storage area 225 (S516). When the processing has not been completed for all the contents (NO at S516), the print flags of the unprocessed contents are checked, and it is determined whether or not there is the content whose print flag is "ON" (S517). When there is the content whose print flag is "ON" (YES at S517), the printing of the content is performed in the recording portion 28 (S518). Then, the processing returns to S516. Note that, when the print flag is not "ON" (NO at S517), the printing is not performed and the processing returns to S516. Then, the processing at S516 to S518 is repeatedly performed. When the processing is completed for all the contents (YES at S516), the processing proceeds to S519, and the "printing completion notification" is transmitted to the server 3 (S519). Then, among the contents stored in the content information storage area 225, the contents received before the previous day are deleted (S520).

Next, the "approval request" that describes the user ID is transmitted to the server 3 (S521). The server 3 decides whether to approve transmission of the content to the user ID. When the approval is given, the "user approved result" is transmitted from the server 3 to the MFP 2, and when the approval is not given, the "user non-approved result" is transmitted. Thus, the MFP 2 subsequently receives a result of the user approval from the server 3 (S522). In this reception processing, when the result of the user approval transmitted from the server 3 is received, it is stored in the server reception buffer storage area 223.

Then, based on whether the received approval result is the "user approved result" or the "user non-approved result", a determination as to whether "approval" has been given or not is made (S523). When the "user non-approved result" is received and therefore the "approval" has not been given (NO at S523), the acquisition print processing is terminated, and the processing returns to the MFP processing. On the other hand, when the "user approved result" is received and therefore the "approval" has been given (YES at S523), the received "user approved result" is transmitted to the viewing terminal 1 (S524). Subsequently, content information transmission processing is performed (S525). Here, the content information stored in the content information storage area 225 (the text of the content, the content ID and the content title) is transmitted to the viewing terminal 1. Thus, the acquisition print processing is terminated, and the processing returns to the MFP processing.

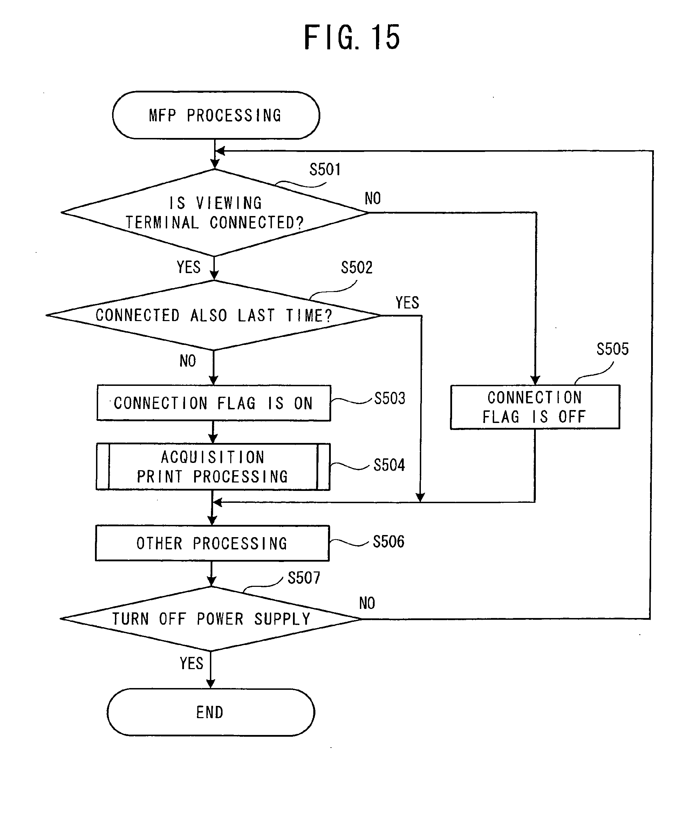

Moreover, in the MFP processing of a modified example, as shown in FIG. 15, the other processing is performed (S506). When the command to turn off the power supply has not been issued (NO at S507), the processing returns to S501. Note that, even when the viewing terminal 1 is connected (YES at S501), if it was connected also at the last time (YES at S502), the acquisition print processing is not performed. The processing immediately proceeds to S506, and the other processing is performed.

As described above, when the viewing terminal 1 is connected, the MFP 2 connects to the server 3 and downloads content. When the print flag of the downloaded content is ON, the printing is performed. Then, the MFP 2 requests the approval from the server 3 for the viewing terminal 1 that is connected to the server 3. When the approval result is OK, it transmits the content received from the server 3 to the viewing terminal 1. Thus, when the viewing terminal 1 is connected to the MFP 2, the content of the preset attribute is automatically printed without the user performing a specific operation.

In the printing control system of the present disclosure, first printing apparatus connection means of the printing apparatus can connect to the viewing terminal, second printing apparatus connection means can connect to the server via a network, and content request transmission means can cause the second printing apparatus connection means to transmit to the server a content request that requests transmission of the content. Server connection means of the server can connect to the printing apparatus, content storage means can store the content, print command information storage means can store, in association with the content, print command information that indicates whether printing is to be performed by the printing apparatus, and first content transmission means can cause the server connection means to transmit, to the printing apparatus, the content stored in the content storage means and the print command information associated with the content, when the server connection means receives the content request transmitted from the content request transmission means. Further, printing control means of the printing apparatus can cause the printing means to print the content, if the print command information indicates that printing is to be performed when the second printing apparatus connection means receives the content and the print command information transmitted from the first content transmission means. Second content transmission means can cause the first printing apparatus connection means to transmit, to the viewing terminal, the content that is transmitted from the first content transmission means and received by the second printing apparatus connection means. Viewing terminal connection means of the viewing terminal can connect to the printing apparatus, second content receiving means can cause the viewing terminal connection means to receive the content transmitted from the second content transmission means, and content storage means can store the content received by the second content receiving means. Accordingly, the content that is set "to be printed" by the print command information is automatically printed. Therefore, for the content with information that is desired to be shared, if "to be printed" is set by the print command information, the printing is automatically performed when the printing apparatus acquires the content. Thus, the information of the content can be shared by a plurality of persons. In addition, the viewing terminal can acquire the content that the printing apparatus has acquired from the server.

Further, in the printing control system of the present disclosure, when the printing apparatus detects that the viewing terminal is connected to the first printing apparatus connection means, the content request transmission means can cause the second printing apparatus connection means to transmit the content request to the server. Accordingly, because the content is acquired from the server when the viewing terminal is connected to the printing apparatus, the content can be acquired from the server without the user performing a specific operation. In addition, the content set "to be printed" can be automatically printed.

Further, in the printing control system of the present disclosure, time acquiring means of the printing apparatus can acquire a current time. The content request transmission means can transmit the content request to the server at a predetermined time. Accordingly, the content is acquired from the server at the predetermined time, and the content that is set "to be printed" can be automatically printed. Therefore, even when the viewing terminal is not connected to the printing apparatus, the content that is desired to be shared is printed. Thus, the information of the content can be shared regardless of the presence of the viewing terminal.

Further, in the printing control system of the present disclosure, when the content is printed by the printing means under control of the printing control means, printing execution information transmission means of the printing apparatus can cause the second printing apparatus connection means to transmit, to the server, printing execution information that indicates that printing of the content has been performed. Printing execution information receiving means of the server can cause the server connection means to receive the printing execution information transmitted from the printing execution information transmission means. Accordingly, a printing status of the content that is set "to be printed" can be confirmed on the server side, and it can be used for various controls.

Further, in the printing control system of the present disclosure, when the printing execution information receiving means receives the printing execution information, cancellation means of the server can change the print command information of the content indicated by the printing execution information to have content that indicates that printing is not performed. Accordingly, it is possible to perform control such that the content that was printed once is prevented from being printed many times.

Furthermore, in the printing control system of the present disclosure, approval request transmission means of the printing apparatus can cause the second printing apparatus connection means to transmit, to the server, an approval request that requests approval of transmission of the content from the second content transmission means to the connected viewing terminal, together with identification information that identifies the connected viewing terminal. Acquisition approval identification information storage means of the server can store the identification information that approves acquisition of the content, approval means can approve the transmission of the content to a user or the viewing terminal that is identified by the identification information indicated by the approval request that is transmitted from the approval request transmission means and received by the server connection means, based on the identification information stored in the acquisition approval identification information storage means, and approval result transmission means can cause the server connection means to transmit an approval result of the approval means to the printing apparatus. Further, approval result receiving means of the printing apparatus can cause the second printing apparatus connection means to receive the approval result transmitted from the approval result transmission means. The second content transmission means can transmit the content to the viewing terminal only when the approval result received by the approval result receiving means indicates approval of the transmission of the content. Accordingly, only the viewing terminal that has been authenticated by the server can acquire the content. Thus, data management of the content can be performed by the server.

Further, in the printing apparatus of the present disclosure, first printing apparatus connection means can connect to the viewing terminal; second printing apparatus connection means can connect to the server via the network; content request transmission means can cause the second printing apparatus connection means to transmit to the server a content request that requests transmission of the content; printing control means can cause the printing means to print the content if, when the second printing apparatus connection means receives the content transmitted from the server and print command information that indicates whether to print the content, the print command information indicates that printing is to be performed; and second content transmission means can cause the first printing apparatus connection means to transmit, to the viewing terminal, the content that is transmitted from the server and received by the second printing apparatus connection means. Accordingly, the content that is set "to be printed" by the print command information is automatically printed. Therefore, for the content with information that is desired to be shared, if "to be printed" is set by the print command information, the printing is automatically performed when the printing apparatus acquires the content. Thus, the information of the content can be shared by a plurality of persons. In addition, the viewing terminal can acquire the content that the printing apparatus has acquired from the server.

Further, in the printing apparatus of the present disclosure, when the printing apparatus detects that the viewing terminal is connected to the first printing apparatus connection means, the content request transmission means can transmit the content request to the server. Accordingly, because the content is acquired from the server when the viewing terminal is connected to the printing apparatus, the content can be acquired from the server without the user performing a specific operation. In addition, the content set "to be printed" can be automatically printed.

Further, in the printing apparatus of the present disclosure, time acquiring means can acquire a current time. The content request transmission means can cause the second printing apparatus connection means to transmit the content request to the server at a predetermined time. Accordingly, the content is acquired from the server at the predetermined time, and the content that is set "to be printed" can be automatically printed. Therefore, even when the viewing terminal is not connected to the printing apparatus, the content that is desired to be shared is printed. Thus, the information of the content can be shared regardless of the presence of the viewing terminal.

Further, in the printing apparatus of the present disclosure, when the content is printed by the printing means under control of the printing control means, printing execution information transmission means can cause the second printing apparatus connection means to transmit, to the server, printing execution information that indicates that printing of the content has been performed. Accordingly, a printing status of the content that is set "to be printed" can be confirmed on the server side, and it can be used for various controls.

Furthermore, in the printing apparatus of the present disclosure, approval request transmission means can cause the second printing apparatus connection means to transmit, to the server, an approval request that requests approval of transmission of the content from the second content transmission means to the connected viewing terminal, together with identification information that identifies the connected viewing terminal; and approval result receiving means can cause the second printing apparatus connection means to receive an approval result of the transmission of the content transmitted from the server. The second content transmission means can transmit the content to the viewing terminal only when the approval result received by the approval result receiving means indicates approval of the transmission of the content. Accordingly, only the viewing terminal that has been authenticated by the server can acquire the content. Thus, it is possible to cause the server to perform data management of the content.

Moreover, in a recording medium recording a program of the present disclosure, by causing a computer to execute the recorded program, it is possible to cause the computer to function as various processing means of the printing apparatus. Accordingly, the same effects as those of the printing apparatus of the present disclosure can be achieved.

## Claims

1. A printing control system, in which a printing apparatus provided with printing means for performing printing and a server that provides content are connected via a network, and which includes a viewing terminal that connects to the printing apparatus and acquires the content from the server via the printing apparatus, and displays the content on a display screen, the printing control system being **characterized in that**:
the printing apparatus includes
first printing apparatus connection means for connecting to the viewing terminal,
second printing apparatus connection means for connecting to the server via the network, and
content request transmission means for causing the second printing apparatus connection means to transmit to the server a content request that requests transmission of the content;
the server includes
server connection means for connecting to the printing apparatus,
content storage means for storing the content,
print command information storage means for storing, in association with the content, print command information that indicates whether printing is to be performed by the printing apparatus, and
first content transmission means for causing the server connection means to transmit, to the printing apparatus, the content stored in the content storage means and the print command information associated with the content, when the server connection means receives the content request transmitted from the content request transmission means;
the printing apparatus further includes
printing control means for causing the printing means to print the content, if the print command information indicates that printing is to be performed when the second printing apparatus connection means receives the content and the print command information transmitted from the first content transmission means, and
second content transmission means for causing the first printing apparatus connection means to transmit, to the viewing terminal, the content that is transmitted from the first content transmission means and received by the second printing apparatus connection means; and
the viewing terminal includes
viewing terminal connection means for connecting to the printing apparatus,
second content receiving means for causing the viewing terminal connection means to receive the content transmitted from the second content transmission means, and
content storage means for storing the content received by the second content receiving means.

2. The printing control system according to claim 1, **characterized in that**
when the printing apparatus detects that the viewing terminal is connected to the first printing apparatus connection means, the content request transmission means causes the second printing apparatus connection means to transmit the content request to the server.

3. The printing control system according to claim 1 or 2, **characterized in that**
the printing apparatus includes time acquiring means for acquiring a current time, and
the content request transmission means transmits the content request to the server at a predetermined time.

4. The printing control system according to any one of claims 1 to 3,
**characterized in that**:
the printing apparatus includes printing execution information transmission means for, when the content is printed by the printing means under control of the printing control means, causing the second printing apparatus connection means to transmit, to the server, printing execution information that indicates that printing of the content has been performed; and
the server includes printing execution information receiving means for causing the server connection means to receive the printing execution information transmitted from the printing execution information transmission means.

5. The printing control system according to any one of claims 1 to 4,
**characterized in that**
the server includes cancellation means for changing the print command information of the content indicated by the printing execution information to have content that indicates that printing is not performed, when the printing execution information receiving means receives the printing execution information.

6. The printing control system according to any one of claims 1 to 5,
**characterized in that**:
the printing apparatus includes
approval request transmission means for causing the second printing apparatus connection means to transmit, to the server, an approval request that requests approval of transmission of the content from the second content transmission means to the connected viewing terminal, together with identification information that identifies the connected viewing terminal;
the server includes
acquisition approval identification information storage means for storing the identification information that approves acquisition of the content,
approval means for approving the transmission of the content to a user or the viewing terminal that is identified by the identification information indicated by the approval request that is transmitted from the approval request transmission means and received by the server connection means, based on the identification information stored in the acquisition approval identification information storage means, and
approval result transmission means for causing the server connection means to transmit an approval result of the approval means to the printing apparatus;
the printing apparatus further includes
approval result receiving means for causing the second printing apparatus connection means to receive the approval result transmitted from the approval result transmission means; and
the second content transmission means transmits the content to the viewing terminal only when the approval result received by the approval result receiving means indicates approval of the transmission of the content.

7. A printing apparatus including printing means for performing printing, which connects to a viewing terminal provided with a display screen that displays an image and which further connects to a server that provides the content via a network, the printing apparatus being **characterized by** comprising:
first printing apparatus connection means for connecting to the viewing terminal;
second printing apparatus connection means for connecting to the server via the network;
content request transmission means for causing the second printing apparatus connection means to transmit to the server a content request that requests transmission of the content;
printing control means for causing the printing means to print the content if, when the second printing apparatus connection means receives the content transmitted from the server and print command information that indicates whether to print the content, the print command information indicates that printing is to be performed; and
second content transmission means for causing the first printing apparatus connection means to transmit, to the viewing terminal, the content that is transmitted from the server and received by the second printing apparatus connection means.

8. The printing apparatus according to claim 7, **characterized in that**
when the printing apparatus detects that the viewing terminal is connected to the first printing apparatus connection means, the content request transmission means transmits the content request to the server.

9. The printing apparatus according to claim 7 or 8, **characterized by** further comprising:
time acquiring means for acquiring a current time, wherein
the content request transmission means causes the second printing apparatus connection means to transmit the content request to the server at a predetermined time.

10. The printing apparatus according to any one of claims 7 to 9, **characterized by** further comprising:
printing execution information transmission means for, when the content is printed by the printing means under control of the printing control means, causing the second printing apparatus connection means to transmit, to the server, printing execution information that indicates that printing of the content has been performed.

11. The printing apparatus according to claim 10, **characterized by** further comprising:
approval request transmission means for causing the second printing apparatus connection means to transmit, to the server, an approval request that requests approval of transmission of the content from the second content transmission means to the connected viewing terminal, together with identification information that identifies the connected viewing terminal; and
approval result receiving means for causing the second printing apparatus connection means to receive an approval result of the transmission of the content transmitted from the server, wherein
the second content transmission means transmits the content to the viewing terminal only when the approval result received by the approval result receiving means indicates approval of the transmission of the content.

12. A recording medium recording a program that causes a computer to function as various processing means of the printing apparatus according to any one of claims 7 to 11.
